# EUROPÄISCHE PATENTSCHRIFT

(11) **EP 2 548 409 B1**
(45) Veröffentlichungstag und Bekanntmachung des Hinweises auf die Patenterteilung: **10.05.2017**
(21) Anmeldenummer: 11709934.1
(22) Anmeldetag: 21.03.2011
(51) Int. Cl.: H05B 33/08, H05B 37/02

(54) **LED-ANSTEUERUNG MIT GETAKTETER KONSTANTSTROMQUELLE**
LED DRIVING BY A SWITCHED CONSTANT CURRENT SOURCE
COMMANDE D'UNE CHAÎNE DE DIODES ÉLECTROLUMINESCENTES PAR UNE SURCE DE COURANT CONSTANTE COMMUTÉE

(30) Priorität: 12.07.2010 DE 102010031239; 19.03.2010 DE 102010003067
(43) Veröffentlichungstag der Anmeldung: 23.01.2013
(73) Patentinhaber: Tridonic AG, 8755 Ennenda (CH)
(72) Erfinder: ZIMMERMANN, Michael, CH-8888 Heiligkreuz (CH); PEREIRA, Eduardo, CH-8854 Siebnen (CH)
(74) Vertreter: Rupp, Christian
(86) Internationale Anmeldenummer: PCT/EP2011/054218
(87) Internationale Veröffentlichungsnummer: WO 2011/113955

(56) Entgegenhaltungen:
- US-A1- 2004 041 620
- US-A1- 2009 230 891
- US-A1- 2010 026 208

## Beschreibung

Die vorliegende Erfindung bezieht sich ganz allgemein auf den Betrieb von LEDs, wobei darunter anorganische LEDs wie auch organische LEDs (OLEDs) zu verstehen sind.

Grundsätzlich ist es bereits bekannt, eine LED-Strecke, die eine oder mehrere in Serie geschaltete LEDs aufweisen kann, ausgehend von einer Konstantstromquelle mit elektrischer Leistung zu versorgen. Es ist ebenfalls bekannt, zur Ausführung eines Dimmens eine PWM-Modulation zu verwenden, so dass in den Einschaltzeitdauern eines PWM-Impulszugs die genannte Konstantstromregelung durchgeführt wird. Beim Dimmen wird also dann das Tastverhältnis des PWM-Signals verändert.

Zur Bereitstellung der Versorgungsspannung der Konstantstromquelle kann beispielsweise eine aktiv getaktete PFC-Schaltung (Power Factor Correction Circuit, Leistungsfaktorkorrekturschaltung) verwendet werden.

Schließlich sind auch noch weitere Anforderungen beim Betrieb von LEDs zu beachten, beispielsweise dass üblicherweise eine galvanische Trennung zwischen der LED-Strecke und der Versorgungspannung des PFCs, typischerweise eine Netzwechselspannung, gefordert wird.

Diese Aufgabe wir gelöst durch die Merkmale der unabhängigen Ansprüche. Die abhängigen Ansprüche bilden den zentralen Gedanken der Erfindung in besonders vorteilhafter Weise weiter.

Ein erster Aspekt der Erfindung betrifft eine LED-Betriebsschaltung, aufweisend:
- einen Schaltungsblock zur Bereitstellung einer einstellbaren DC-Spannung, und
- eine getaktete Konstantstromquelle, bspw. einen mit der DC-Spannung versorgten DC/DC-Konverter, mit einem Schalter, der durch eine Steuerschaltung getaktet ist, derart, dass eine Verringerung der Einschaltzeitdauer tON des Schalters zu einer Verringerung der Leistungsbereitstellung führt, wobei ausgehend von der Konstantstromquelle eine oder mehrere LEDs versorgbar sind,
wobei die Steuereinheit dazu ausgelegt ist neben der Verringerung der Einschaltzeitdauer t_{ON} wenigstens eine weitere Steuergrösse der Konstantstromquelle oder des Schaltungsblocks zur DC-Bereitstellung zu verändern,
wobei die weitere Steuergrösse des Schaltungsblocks die Vorgabe eines Sollwerts der einstellbaren DC-Ausgangsspannung des Schaltungsblocks zur Bereitstellung einer DC-Spannung ist, und wobei die Steuereinheit dazu ausgelegt ist, die Einschaltzeitdauer des Schalters bis zu einem Minimalwert zu verringern, um dann die Leistungsbereitstellung der Konstantstromquelle durch Absenken der DC-Spannung zu verringern.

Die Steuereinheit kann dazu ausgelegt sein, die weitere Steuergrösse der Konstantstromquelle oder einstellbaren DC-Spannung nur bei bestimmten Lastzuständen oder Betriebszuständen zu verändern.

Die Steuereinheit kann dazu ausgelegt sein, zur Verringerung der Leistungsbereitstellung die Einschaltzeitdauer t_{ON} des Schalters bis zu einem Minimalwert t_{ON_MIN} zu verringern, um dann unter Beibehaltung der minimalen Einschaltzeitdauer t_{ON_MIN} oder Erhöhung der Einschaltzeitdauer die Leistungsbereitstellung durch Veränderung der weiteren Steuergrösse zu verringern.

Der Schaltungsblock zur Bereitstellung einer DC-Spannung kann eine aktiv getaktete PFC-Schaltung sein.

Die Leistungsbereitstellung kann durch Veränderung der Taktung eines Schalters der PFC-Schaltung verändert werden.

Der Steuereinheit kann wenigstens eine die Last wiedergebende Rückführgrösse zuführbar sein, wie bspw.:
- ein Dimmsignal,
- der Strom durch die wenigstens eine LED, und/oder
- die Spannung über der wenigstens einen LED.

Die Steuereinheit kann eine Schnittstelle zur Zuführung eines Dimmwerts aufweisen.

Die getaktete Konstantstromquelle kann ausgewählt sein aus:
- Buck-Konverter,
- Boost-Konverter,
- Buck-Boost-Konverter,
- SEPIC-Konverter.

Die Erfindung betrifft weiterhin eine LED-Leuchte,
aufweisend wenigstens eine LED und eine LED-Betriebsschaltung der oben genannten Art.

Die Erfindung schlägt auch ein Verfahren zum Betrieb wenigstens einer LED vor,
mit einer LED-Betriebsschaltung, aufweisend:
- Erzeugung einer einstellbaren DC-Spannung, und
- Taktung einer Konstantstromquelle, bspw. einen mit der DC-Spannung versorgten DC/DC-Konverter, mit einem Schalter, derart, dass eine Verringerung der Einschaltzeitdauer tON des Schalters zu einer Verringerung der Leistungsbereitstellung führt, wobei ausgehend von der Konstantstromquelle eine oder mehrere LEDs versorgt werden,
wobei neben der Verringerung der Einschaltzeitdauer tON wenigstens eine weitere Steuergrösse der Konstantstromquelle oder einstellbaren DC-Spannung verändert wird,
wobei die weitere Steuergrösse der einstellbaren DC-Spannung die Vorgabe eines Sollwerts der einstellbaren DC-Ausgangsspannung eines Schaltungsblocks zur Bereitstellung einer DC-Spannung ist, und
wobei die Steuereinheit die Einschaltzeitdauer des Schalters bis zu einem Minimalwert verringert, um dann die Leistungsbereitstellung der Konstantstromquelle durch Absenken der DC-Spannung zu verringern.

Zur Verringerung der Leistungsbereitstellung kann die Einschaltzeitdauer t_{ON} des Schalters bis zu einem Minimalwert t_{ON_MIN} verringert werden, um dann unter Beibehaltung der minimalen Einschaltzeitdauer t_{ON_MIN} oder Erhöhung der Einschaltzeitdauer die Leistungsbereitstellung durch Veränderung der weiteren Steuergrösse zu verringern.

Die Leistungsbereitstellung kann durch Änderung der Betriebsart der Schaltung erreicht werden, die die einstellbare DC-Spannung erzeugt. Bspw. kann ein aktiv getakteter PFC seine Betriebsart ändern.

Die Leistungsbereitstellung kann durch Veränderung der Taktung eines Schalters der PFC-Schaltung verändert werden.

Einer Steuerung/Regelung der Lastbereitstellung kann wenigstens eine Rückführgrösse zugeführt werden, wie bspw.:
- ein Dimmsignal,
- der Strom durch die wenigstens eine LED, und/oder
- die Spannung über der wenigstens einen LED.

Die weitere Steuergrösse der Konstantstromquelle oder einstellbaren DC-Spannung kann nur bei bestimmten Lastzustand oder Betriebszustand verändert werden. Es gibt somit vorzugsweise einen oder mehrere Lastzustände oder Betriebszustände, bei denen die weitere Steuergrösse der Konstantstromquelle oder der einstellbaren DC-Spannung nicht geändert wird.

Alternativ oder zusätzlich kann vorgesehen sein, dass die weitere Steuergrösse der Konstantstromquelle oder einstellbaren DC-Spannung nur geändert wird, wenn der Wert (Ausmass) der Veränderung des bestimmten Lastzustands oder Betriebszustands in einem vorgegebenen Bereich liegt, bspw. eine Mindestschwelle überschreitet.

Schliesslich betrifft die Erfindung auch eine Steuereinheit, insbesondere Integrierte Schaltung wie bspw. ASIC oder Mikrokontroller, die zu Durchführung eines derartigen Verfahrens ausgebildet ist.

Weitere Merkmale, Vorteile, Eigenschaften und Aufgaben der vorliegenden Erfindung sollen nunmehr erläutert werden anhand von Ausführungsbeispielen der vorliegenden Erfindung unter Bezugnahme auf die Figuren der begleitenden Zeichnungen.
- Fig. 1: zeigt dabei ein Beispiel für eine getaktete Konstantstromquelle in Form eines Buck-Konverters,
- Fig. 2: zeigt ein erfindungsgemäßes System, bei dem eine Steuereinheit einerseits eine getaktete Konstantstromquelle ansteuert und andererseits auch Einfluss nimmt auf die Erzeugung der DC-Versorgungsspannung V_{Bus} für die Konstantstromquelle,
- Fig. 3: zeigt die Veränderung der Versorgungsspannung V_{Bus} für die Konstantstromquelle wie die Veränderung der Einschaltzeitdauer des Schalters der getakteten Konstantstromquelle abhängig vom zu erzielenden Strom durch die LED-Strecke I_{LED},
- Fig. 4: zeigt die Abhängigkeit der Einschaltzeitdauer des Schalters der getakteten Konstantstromquelle sowie der Versorgungsspannung V_{Bus} abhängig von der Spannung über der LED-Strecke VLED, und
- Fig. 5: zeigt ein spezifisches Ausführungsbeispiel, bei dem die kombinierte Regelung der Leistungsbereitstellung einer getakteten Konstantstromquelle Einflussnahme auf die Steuergröße 'DC-Versorgungsspannung der getakteten Konstantstromquelle' und 'Taktung des Schalters der getakteten Konstantstromquelle' erfolgt.

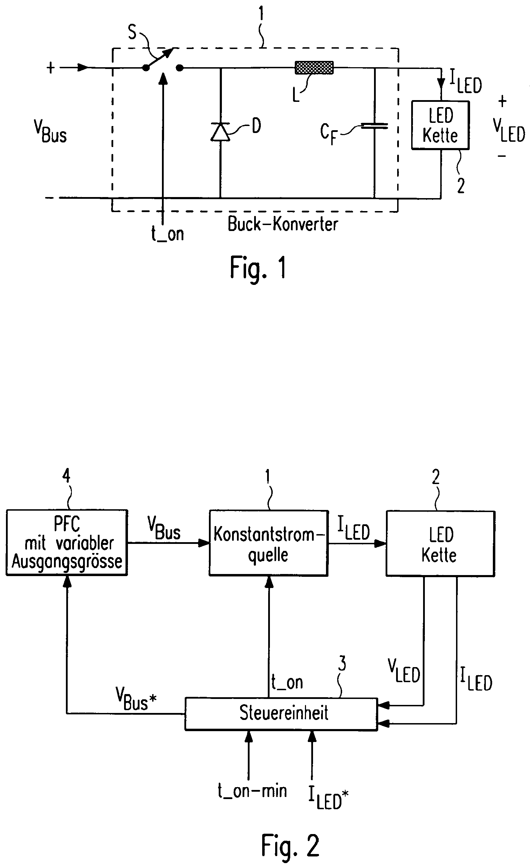

Figur 1 zeigt ein Beispiel für eine getaktete Konstantstromquelle, die in diesem Fall als Buck-Konverter 1 ausgeführt ist. Indessen kann jede andere getaktete Konstantstromquelle in Form eines DC/DC-Wandlers verwendet werden, wie beispielsweise Boost-Konverter, Buck-Boost-Konverter, Flyback-Konverter, SEPIC, etc.

Der getakteten Konstantstromquelle 1 wird eine einstellbare DC-Versorgungsspannung V_{Bus} zugeführt. Wie später erläutert werden wird, kann diese einstellbare DC-Versorgungsspannung V_{Bus} beispielsweise von einer aktiv getakteten PFC (Power Factor Correction Circuit) erzeugt werden.

Eine Steuereinheit (in Figur 1 noch nicht gezeigt) steuert oder regelt die Einschaltzeitdauer t_{ON} eines Schalters S des Buck-Konverters 1, der weiterhin eine Diode D und eine Speicherdrossel L aufweist. Die Ausgangsspannung der getakteten Konstantstromquelle 1 wird durch einen Speicherkondensator C_{F} stabilisiert. Die Spannung über dem Kondensator C_{F} wird dann der LED-Strecke 2 zugeführt, die eine oder mehrere LEDs aufweist. Der Strom durch die LED-Strecke 2 wird mit I_{LED} und die Spannung über der LED-Strecke mit V_{LED} bezeichnet. Die LED-Strecke 2 kann neben den LED selbst auch noch optional einen Linearregler als zusätzliche Konstantstromquelle aufweisen. Gerade wenn die LED-Strecke 2 in Form von mehreren in Serie verschalteten LED-Modulen besteht, kann jedes dieser LED-Module einen solchen Linearregler zur Stabilisierung des LED-Stromes aufweisen.

In bekannter Weise kann die Leistungsbereitstellung der getakteten Konstantstromquelle 1 von Figur 1 durch eine Verringerung der Einschaltzeitdauer tₒₙ des zyklisch geöffneten und geschlossenen Schalters S erzielt werden.

Indessen besteht das Problem, dass bei einer zunehmenden Verringerung der Einschaltzeitdauer tₒₙ die elektrischen Verluste überproportional zu der den LEDs 2 zugeführten Leistung ansteigen.

Bezug nehmend auf Figur 2 soll nunmehr erläutert werden, dass eine Steuereinheit 3 einerseits als Steuergröße die Einschaltzeitdauer tₒₙ des Schalters S der Konstantstromquelle 1 ausgibt.

Indessen ist wie in Figur 2 gemäß der Erfindung vorgesehen, dass die Steuereinheit 3 (oder auch eine davon getrennte weitere Steuereinheit) als weitere Steuergröße für die Leistungsbereitstellung der Konstantstromquelle 1 Einfluss nimmt auf die Höhe der DC-Versorgungsspannung V_{Bus} der getakteten Konstantstromquelle 1. Im dargestellten Beispiel gibt die Steuereinheit 3 den Sollwert V_{Bus}∗ vor, der dann in der Regelung des aktiv getakteten PFCs 4 zur Ansteuerung des dort vorgesehenen Schalters (nicht dargestellt) verwendet wird.

Es kann natürlich einerseits die Steuereinheit 3 von Figur 2 direkt Einfluss nehmen auf die Taktung des Schalters der PFC-Schaltung 4. Alternativ kann der Sollwert V_{Bus}∗ für die Ausgangsspannung des PFCs 4 auch einer weiteren Steuereinheit der PFC-Schaltung vorgegeben werden, die dann abhängig von einer Messung der tatsächlichen Ausgangsspannung V_{Bus} die Taktung des Schalters des PFCs 4 vornimmt. Die PFC-Schaltung kann beispielsweise als SEPIC-Konverter ausgeführt sein. Indessen kann jeder andere getaktete Schaltregler in Form eines DC/DC-Wandlers verwendet werden, wie beispielsweise Buck-Boost-Konverter, Boost-Konverter, Buck-Boost-Konverter, Flyback-Konverter, CUK, etc.

Zusätzlich oder alternativ kann nicht nur die Busspannung V_{Bus} als Steuergröße des Schaltungsblocks zur DC-Bereitstellung angepasst werden, sondern auch die Betriebsweise des Schaltungsblocks zur DC-Bereitstellung (insbesondere bei Einsatz eines aktiv getakteten PFC). Abhängig vom Lastzustand oder auch Betriebszustand kann der Schaltungsblocks zur DC-Bereitstellung entweder selbstständig (also direkt der PFC 4) oder durch eine entsprechende Ansteuerung, insbesondere durch die Steuereinheit 3, den Betriebsmodus wechseln. Insbesondere kann der PFC 4 bei einem Betrieb mit hoher Last entweder im sogenannten Grenzbetrieb zwischen lückendem und nichtlückendem Strombetrieb (,Borderline Mode') oder im nichtlückendem Strombetrieb (,continuous conduction mode') arbeiten, und bei Betrieb einer geringen Last oder im Stand-By Modus im lückendem Strombetrieb (,discontinuous conduction mode') arbeiten. Es wäre aber beispielsweise auch möglich, dass der PFC 4 bei Betrieb einer geringen Last oder im Stand-By Modus in sogenannten Burst Modus (also eines Puls-Pause-Betriebsmodus oder auch Impulsmodus genannt), wechselt. Dabei wird weiterhin die Versorgungsspannung (Busspannung V_{Bus}) gleichgehalten, aber nach einer Anzahl von Ansteuerimpulsen für den oder die Schalter des PFC 4 eine längere Pause eingelegt, bevor der nächste "Burst" (Impuls) als Ansteuersignal für die Schalter des PFC 4 angelegt wird. Die Pause zwischen den Impulszügen ist dabei wesentlich länger, also beispielsweise mindestens das Doppelte einer Addition der Einschaltzeitdauern der Schalter des PFC 4.

Die Steuereinheit kann dazu ausgelegt sein, dass abhängig vom Lastzustand oder auch Betriebszustand neben der Verringerung der Einschaltzeitdauer t_{ON} wenigstens eine weitere Steuergrösse der Konstantstromquelle oder des Schaltungsblocks zur DC-Bereitstellung verändert werden kann.

Vorzugsweise erfolgt die zusätzliche Änderung einer weiteren Steuergrösse der Konstantstromquelle oder des Schaltungsblocks zur DC-Bereitstellung nur bei bestimmten Lastzuständen oder auch Betriebszuständen der LED-Betriebsschaltung. Beispielsweise kann die zusätzliche Veränderung einer weiteren Steuergrösse der Konstantstromquelle oder des Schaltungsblocks zur DC-Bereitstellung nur in einem Bereich geringer Belastung oder in einem Fehlerbetrieb erfolgen. Dies kann also insbesondere bei einer geringen Lichtleistung der LED-Strecke der Fall sein.

Es gibt somit vorzugsweise einen oder mehrere Lastzustände oder Betriebszustände, bei denen die weitere Steuergrösse der Konstantstromquelle oder der einstellbaren DC-Spannung nicht geändert wird.

Alternativ oder zusätzlich kann vorgesehen sein, dass die weitere Steuergrösse der Konstantstromquelle oder einstellbaren DC-Spannung nur geändert wird, wenn der Wert (Ausmass) der Veränderung des bestimmten Lastzustands oder Betriebszustands in einem vorgegebenen Bereich liegt, bspw. eine Mindestschwelle überschreitet.

Wie in Figur 2 auch ersichtlich, können der Steuereinheit 3 verschiedene Rückführgrößen zugeführt werden. Im vorliegenden Beispiel sind dies insbesondere ein Signal I_{LED}∗, das den Sollwert für den Strom I_{LED} durch die LEDs 2 vorgibt. Da die Lichtleistung der LED-Strecke 2 im Wesentlichen proportional ist zu dem Strom I_{LED} durch die LED-Strecke, kann dieses Sollwertsignal I_{LED}∗ auch als Dimmwertvorgabe bezeichnet werden. Einerseits kann also die Steuereinheit 3 abhängig von einer Dimmwertvorgabe I_{LED}∗ die Steuergrößen ' Einschaltzeitdauer Tₒₙ' und 'Versorgungsspannung V_{Bus}' beeinflussen. Dabei kann es sich um eine reine Steuerung handeln, d.h. abhängig von der Sollwertvorgabe werden mittels einer analytischen Funktion und/oder einer Abgleichstabelle oder anderen Mitteln die einzustellenden Werte für die Einstellzeitdauer Tₒₙ und die Versorgungsspannung V_{Bus} gewählt.

Die Steuereinheit 3 kann den LED-Strom I_{LED} also auch ohne direkte Regelschleife einstellen, beispielsweise aufgrund einer Dimmwertvorgabe (beispielsweise durch einen Dimmer oder einen über eine Schnittstelle zugeführten Dimmbefehl).

Alternativ oder zusätzlich können indessen auch Messgrößen der Steuereinheit 3 zurückgeführt werden, insbesondere aus dem Bereich der Konstantstromquelle 1 und/oder der LED-Strecke 2. Im dargestellten Beispiel sind die Rückführgrößen insbesondere der gemessene LED-Strom I_{LED} (als Istwert) und/oder die Spannung V_{LED} über den LEDs. Es können der Steuereinheit 3 aber beispielsweise auch externe Steuersignale wie Dimmwertvorgaben, Sensorsignale (Bewegungsmelder, Tageslichtsensor,...) oder Farbsteuerbefehle zugeführt werden.

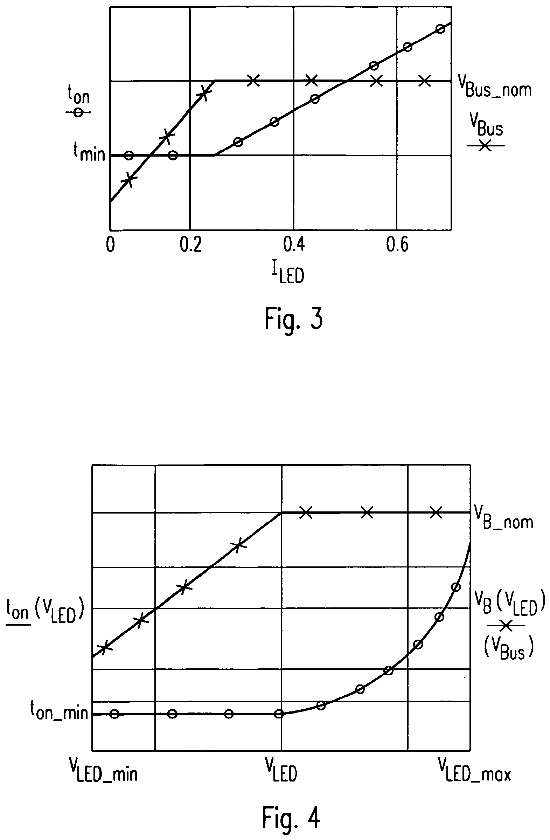

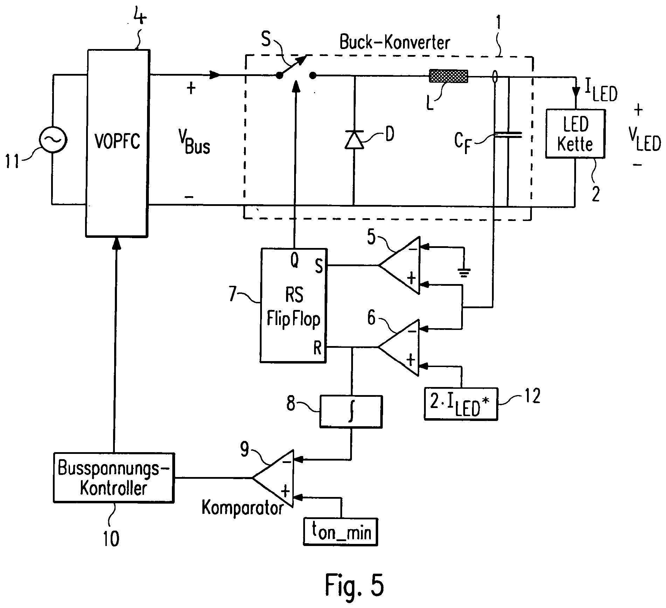

Erfindungsgemäß ist weiterhin vorgesehen, dass die Steuereinheit 3 eine Mindesteinschaltzeitdauer t_{on min} für den Schalter der getakteten Konstantstromquelle 1 vorgebbar ist. Wie im vorliegenden insbesondere unter Bezugnahme auf Figuren 3 und 5 verringert die Steuereinheit 3 die Einschaltzeitdauer Tₒₙ des Schalters der Konstantstromquelle 1 zur Verringerung der Leistungsbereitstellung für die LED-Strecke 2 nur bis zu dem vorgegebenen Mindestwert für die Einschaltzeitdauer T_{on min}. Bei Erreichen des Mindestwerts der Einschaltzeitdauer T_{on min} für den Schalter S der Konstantstromquelle 1 welche Steuereinheit 3 dann alternativ oder zusätzlich wenigstens eine weitere Steuergröße aus dem Bereich der Bereitstellung der Versorgungspannung V _{Bus} und der getakteten Konstantstromquelle 1, falls eine Verringerung der Leistungsbereitstellung beispielsweise vorgegeben durch ein Dimmwertsignal I_{LED}∗ notwendig ist, die nicht mehr durch eine Verringerung der Einschaltzeitdauer tₒₙ bis zu dem Mindestwert t_{on min} erreichbar ist.

Im vorliegenden Beispiel verringert die Steuereinheit 3 direkt oder indirekt die Amplitude der DC-Versorgungsspannung V_{Bus}.

Dies ist in Figur 3 gezeigt. Die X-Achse in dieser Figur bezeichnet dabei den LED-Strom I_{LED}, der repräsentativ ist für die zu erzielende Lichtleitsung. Von dem maximalen LED-Strom I_{LED} kommend wird wie dargestellt zuerst die Einschaltzeitdauer des Schalters im Wesentlichen linear verringert, bis ein vorgegebener Mindestwert für die Einschaltzeitdauer T_{on min} erreicht ist. Ab diesem Zeitpunkt wird in dem dargestellten Beispiel zur Verringerung der Leistungsbereitstellung dann die Einschaltzeitdauer konstant gehalten, d.h. auf dem Wert t_{on min}. Die weitere Verringerung der Leistungsbereitstellung erfolgt dann durch eine beispielsweise lineares Absenken der Versorgungsspannung V_{Bus} der getakteten Konstantstromquelle 1.

Figur 4 zeigt eine vergleichbare Darstellung zu Figur 3, wobei indessen hier als Größe für die X-Achse die Spannung über der LED-Strecke V_{LED} aufgetragen ist und somit die Abhängigkeit der Einschaltzeitdauer Tₒₙ des Schalters und der Versorgungsspannung V_{Bus} (bzw. V_{B}) von der Spannung V_{LED} (über der LED-Strecke 2) gezeigt ist.

Alternativ zu der kombinierten Regelung gemäß Figur 3 kann indessen auch vorgesehen sein, dass die Einschaltzeitdauer bei Erreichen des Mindestwerts T_{on min} wieder erhöht wird, beispielsweise bis auf einen Varianzwert, und dies durch ein Absenken der Versorgungspannung V_{Bus} der getakteten Konstantstromquelle überkompensiert wird.

Die Steuereinheit 3 kann auch die Busspannung V_{Bus} überwachen, insbesondere auch den Rippel (Welligkeit) der Busspannung V_{Bus} (d.h. die Schwankungen innerhalb einer bestimmten Zeit). Abhängig von der Auswertung des Rippels der Busspannung V_{Bus} kann die Steuereinheit 3 die Ansteuerung der getakteten Konstantstromquelle 1 beeinflussen. Insbesondere kann sie die Einschaltzeitdauer der getakteten Konstantstromquelle 1 an die Auswertung des Rippels der Busspannung V_{Bus} anpassen, um den Rippel am Ausgang der getakteten Konstantstromquelle 1 zu reduzieren. Vorzugsweise wird dabei die Einschaltzeitdauer der getakteten Konstantstromquelle 1 bei steigender Busspannung V_{Bus} abgesenkt, und bei sinkender Busspannung V_{Bus} erhöht. Auf diese Weise kann erreicht werden, dass dieser Rippel auf der Busspannung V_{Bus} weniger stark an den Ausgang der getakteten Konstantstromquelle 1 weitergeführt wird. Diese Anpassung der Einschaltzeitdauer der getakteten Konstantstromquelle 1 aufgrund des Rippels der Busspannung V_{Bus} kann zusätzlich zu der Regelschleife für die Regelung des LED-Stromes I_{LED} erfolgen oder als Eingangsgröße mit in diese Regelschleife eingehen oder aber als zusätzliche Einflussnahme bei einer Stellung der Einschaltzeitdauer als Funktion des gewünschten LED-Stromes I_{LED} in die Einstellung der Einschaltzeitdauer mit eingehen.

Figur 5 zeigt ein konkretes Ausführungsbeispiel (Implementierung) für eine derartige kombinierte Regelung. Wie dort dargestellt wird als Rückführgröße induktiv der Strom I_{LED} durch die LEDs erfasst und zwei Komparatoren 5, 6 zugeführt, deren Ausgangssignal einem RS-Flipflop 7 zugeführt wird.

Einer der beiden Komparatoren vergleicht das IstwertSignal I_{LED} an dem invertierten Eingang mit dem Sollwert Signal I_{LED}∗. Das Differenzsignal wird zeitlich integriert 8, wobei das Integrationsergebnis dem invertierten Eingang eines weiteren Komparators 9 zugeführt wird. Dieser Komparator 9 vergleicht das Ergebnis der Integration 8 der Regeldifferenz mit der vorgegebenen Mindesteinschaltzeitdauer t_{on min} für den Schalter S der getakteten Konstantstromquelle 1.

Das Ausgangssignal dieses weiteren Komparators 9 wird einem Busspannungskontroller 10 zugeführt, der direkt oder indirekt der aktiv getakteten PFC 4 derart beeinflusst, dass abhängig von dem Ausgangssignal des weiteren Komparators 9 die Busspannung abgesenkt wird.

In bekannter Weise wird der PFC 4 mit einer AC-Spannung 11 versorgt, die beispielsweise eine Netzwechselspannung sein kann. Üblicherweise ist zwischen der Wechselspannung 11 und dem PFC 4 noch ein Gleichrichter, ein Filterschaltung, etc. geschaltet.

Bei der Schaltung in Figur 5 wird der Busspannungskontroller 10 immer auf die maximal mögliche Busspannung V_{Bus} regeln, solange das Integrationsergebnis 8 größer ist als die minimal zulässige Zeitdauer T_{on min}.

Das RS-Flipflop 7 zeigt nur in einfacher Weise die Implementierung einer Hystereseregelung für das Einschalten des Schalters S der getakteten Konstantstromquelle 1. Die Einschaltschwelle für den Schalter (MOSFET) des dargestellten Buck-Konverters wird immer dann erreicht, wenn der Strom durch die LED auf Null gesunken ist. Dies entspricht der Implementierung des sog. Borderline-Modes oder Critical Conduction Modes (Grenzfall zwischen den Lücken und Nichtlücken im Strombetrieb). Indessen kann auch vorgesehen sein, dass der Strom erst auf dem Nullpegel eine Zeitlang verweilt, bevor der Schalter wieder eingeschaltet wird (Discontinuous Conduction Mode oder lückender Strombetrieb). Alternativ kann die Einschaltschwelle den Schalter auch bei einem Strompegel von höher als Null liegen, so dass dann der sog. Continuous Conduction Mode (nichtlückender Strombetrieb) implementiert ist.

Im vorliegenden Fall ist die Ausschaltschwelle für den Schalter dadurch definiert, dass der Komparator-Vergleichswert 12 auf das Doppelte des Sollwerts des LED-Stroms I_{LED}- also zweimal I_{LED}∗ gesetzt ist.

Im Falle des Borderline-Mode bedeutet dies, dass der Stromzyklus von Null auf das Doppelte des Sollwerts ansteigt und dann wieder auf Null abfällt. Und des somit entstehenden dreieckförmigen Stromverlaufs ist dann das zeitliche Mittel des Strom mit dem Peak zweimal I_{LED}∗ genau dem gewünschten Sollwert I_{LED}∗.

In dem Beispiel nach Fig. 5 umfasst die Steuereinheit 3 unter anderem die Komparatoren 5, 6, 9, einen RS-Flipflop 7 und einen Busspannungskontroller 10. Dieses Beispiel zeigt, dass die Steuereinheit 3 auch aus mehreren einzelnen Elementen aufgebaut und zumindest teilweise auch diskret aufgebaut werden kann.

## Patentansprüche

1. LED-Betriebsschaltung, aufweisend:
a) einen Schaltungsblock (4) zur Bereitstellung einer einstellbaren DC-Spannung (V_{Bus}), und
b) eine getaktete Konstantstromquelle (1), d.h. einen mit der DC-Spannung (V_{Bus}) versorgten DC/DC-Konverter, mit einem Schalter (S), der durch eine Steuereinheit (3) getaktet ist, derart, dass eine Verringerung der Einschaltzeitdauer (t_{ON}) des Schalters (S) zu einer Verringerung der Leistungsbereitstellung führt, wobei ausgehend von der Konstantstromquelle (1) eine oder mehrere LEDs (2) versorgbar sind,
c) wobei die Steuereinheit (3) dazu ausgelegt ist neben der Verringerung der Einschaltzeitdauer (t_{ON}) wenigstens eine weitere Steuergrösse der Konstantstromquelle (1) oder des Schaltungsblocks (4) zur DC-Bereitstellung zu verändern,
d) wobei die weitere Steuergrösse des Schaltungsblocks (4) die Vorgabe eines Sollwerts der einstellbaren DC-Ausgangsspannung des Schaltungsblocks (4) zur Bereitstellung einer DC-Spannung ist, und
e) wobei die Steuereinheit (3) dazu ausgelegt ist, die Einschaltzeitdauer (t_{ON}) des Schalters (S) bis zu einem Minimalwert (t_{ON_MIN}) zu verringern, um dann die Leistungsbereitstellung der Konstantstromquelle (1) durch Absenken der DC-Spannung (V_{Bus}) zu verringern.

2. LED-Betriebsschaltung nach Anspruch 1, wobei die Steuereinheit (3) dazu ausgelegt ist, die weitere Steuergrösse der Konstantstromquelle (1) oder einstellbaren DC-Spannung (V_{Bus}) nur bei bestimmten Lastzuständen oder Betriebszuständen zu verändern.

3. LED-Betriebsschaltung nach Anspruch 1 oder 2, wobei die Steuereinheit (3) dazu ausgelegt ist, zur Verringerung der Leistungsbereitstellung die Einschaltzeitdauer (t_{ON}) des Schalters (S) bis zu einem Minimalwert (t_{ON_MIN}) zu verringern, um dann unter Beibehaltung der minimalen Einschaltzeitdauer (t_{ON_MIN}) oder Erhöhung der Einschaltzeitdauer die Leistungsbereitstellung durch Veränderung der weiteren Steuergrösse zu verringern.

4. LED-Betriebsschaltung nach einem der vorhergehenden Ansprüche, bei der der Schaltungsblock (4) zur Bereitstellung einer DC-Spannung eine aktiv getaktete PFC-Schaltung ist.

5. LED-Betriebsschaltung nach Anspruch 4, wobei die Leistungsbereitstellung durch Veränderung der Taktung eines Schalters der PFC-Schaltung veränderbar ist.

6. LED-Betriebsschaltung nach einem der vorhergehenden Ansprüche, bei der der Steuereinheit (3) wenigstens eine die Last wiedergebende Rückführgrösse zugeführt ist, wie bspw.:
- ein Dimmsignal,
- der Strom durch die wenigstens eine LED, und/oder
- die Spannung über der wenigstens einen LED.

7. LED-Betriebsschaltung nach einem der vorhergehenden Ansprüche, bei der der Steuereinheit (3) eine Schnittstelle zur Zuführung eines Dimmwerts aufweist.

8. LED-Betriebsschaltung nach einem der vorhergehenden Ansprüche,bei der die getaktete Konstantstromquelle (1) ausgewählt ist aus:
- Buck-Konverter,
- Boost-Konverter,
- Buck-Boost-Konverter,
- SEPIC-Konverter.

9. LED-Leuchte, aufweisend wenigstens eine LED und eine Betriebsschaltung nach einem der vorhergehenden Ansprüche.

10. Verfahren zum Betrieb wenigstens einer LED, mit einer LED-Betriebsschaltung, aufweisend:
a) Erzeugung einer einstellbaren DC-Spannung (V_{Bus}), und
b) Taktung einer Konstantstromquelle (1), d.h. einen mit der DC-Spannung versorgten DC/DC-Konverter, mit einem Schalter (S), derart, dass eine Verringerung der Einschaltzeitdauer (t_{ON}) des Schalters (S) zu einer Verringerung der Leistungsbereitstellung führt, wobei ausgehend von der Konstantstromquelle (1) eine oder mehrere LEDs (2) versorgt werden,
c) wobei neben der Verringerung der Einschaltzeitdauer (t_{ON}) wenigstens eine weitere Steuergrösse der Konstantstromquelle (2) oder einstellbaren DC-Spannung (V_{Bus}) verändert wird,
d) wobei die weitere Steuergrösse der einstellbaren DC-Spannung (V_{Bus}) die Vorgabe eines Sollwerts der einstellbaren DC-Ausgangsspannung eines Schaltungsblocks zur Bereitstellung einer DC-Spannung ist und
e) wobei die Steuereinheit (3) die Einschaltzeitdauer (t_{ON}) des Schalters (S) bis zu einem Minimalwert (t_{ON_MIN}) verringert, um dann die
Leistungsbereitstellung der Konstantstromquelle (1) durch Absenken der DC-Spannung (V_{Bus}) zu verringern.

11. Verfahren nach Anspruch 10, wobei zur Verringerung der Leistungsbereitstellung die Einschaltzeitdauer (t_{ON}) des Schalters (S) bis zu einem Minimalwert (t_{ON_MIN}) verringert wird, um dann unter Beibehaltung der minimalen Einschaltzeitdauer (t_{ON_MIN}) oder Erhöhung der Einschaltzeitdauer die Leistungsbereitstellung durch Veränderung der weiteren Steuergrösse zu verringern.

12. Verfahren nach einem der Ansprüche 10 oder 11, wobei der Schaltungsblock zur Bereitstellung einer DC-Spannung eine aktiv getaktete PFC-Schaltung ist.

13. Verfahren nach Anspruch 12, wobei die Leistungsbereitstellung durch Veränderung der Taktung eines Schalters der PFC-Schaltung verändert wird.

14. Verfahren nach einem der Ansprüche 10 bis 13, bei dem einer Steuerung/Regelung der Lastbereitstellung wenigstens eine Rückführgrösse zugeführt wird, wie bspw.:
- ein Dimmsignal,
- der Strom durch die wenigstens eine LED, und/oder
- die Spannung über der wenigstens einen LED.

15. Verfahren nach einem der Ansprüche 10 bis 14, bei dem die weitere Steuergrösse der Konstantstromquelle (1) oder einstellbaren DC-Spannung nur bei bestimmten Lastzustand oder Betriebszustand verändert wird.

16. Steuereinheit, insbesondere Integrierte Schaltung wie bspw. ASIC oder Mikrokontroller, die zu Durchführung eines Verfahrens nach einem der Ansprüche 10 bis 15 ausgebildet ist.

## Claims

1. LED operating circuit, having:
a) a circuit block (4) for supplying an adjustable DC voltage (V_{Bus}), and
b) a clocked constant current source (1), i.e. a DC/DC converter, supplied with the DC voltage (V_{Bus}), with a switch (S), clocked by a control unit (3) in such a way that a reduction in the switch-on time (t_{ON}) of the switch (S) results in a reduction in the supply of power, wherein one or several LEDs (2) are suppliable originating from the constant current source (1),
c) wherein the control unit (3) is designed, in addition to reducing the switch-on time (t_{ON}), to change at least one further control variable of the constant current source (1) or of the circuit block (4) for the supplying of DC,
d) wherein the further control variable of the circuit block (4) is the presetting of a target value of the adjustable DC output voltage of the circuit block (4) for providing a DC voltage, and
e) wherein the control unit (3) is designed to reduce the switch-on time (t_{ON}) of the switch (S) up to a minimum value (t_{ON_MIN}) to then reduce the supply of power of the constant current source (1) by lowering the DC voltage (V_{Bus}).

2. LED operating circuit according to claim 1, wherein the control unit (3) is designed to change the further control variable of the constant current source (1) or adjustable DC voltage (V_{Bus}) only in certain load states or operating states.

3. LED operating circuit according to claim 1 or 2, wherein the control unit (3) is designed to reduce the switch-on time (t_{ON}) of the switch (S), for reduction in the supply of power, up to a minimal value (t_{ON_MIN}) to then, while maintaining the minimal switch-on time (t_{ON_MIN}) or increasing the switch-on time, reduce the supply of power by changing the further control variable.

4. LED operating circuit according to one of the preceding claims, where the circuit block (4) for supplying a DC voltage is an actively clocked PFC circuit.

5. LED operating circuit according to claim 4, wherein the supply of power is changeable by changing the clocking of a switch of the PFC circuit.

6. LED operating circuit according to one of the preceding claims, where at least one feedback variable, rendering the load, is fed to the control unit (3), such as:
- a dimming signal,
- the current through the at least one LED, and/or
- the voltage across the at least one LED.

7. LED operating circuit according to one of the preceding claims, where the control unit (3) has an interface for feeding a dimming value.

8. LED operating circuit according to one of the preceding claims, where the clocked constant current source (1) is selected from:
- buck converter,
- boost converter,
- buck-boost converter,
- SEPIC converter.

9. LED luminaire, having at least one LED and an operating circuit according to one of the preceding claims.

10. Method for operating at least one LED, with an LED operating circuit, having:
a) generation of an adjustable DC voltage (V_{Bus}), and
b) clocking of a constant current source (1), i.e. a DC/DC converter, supplied with the DC voltage, with a switch (S), in such a way that a reduction in the switch-on time (t_{ON}) of the switch (S) results in a reduction in the supply of power, wherein one or several LEDs (2) are supplied originating from the constant current source (1),
c) wherein, in addition to the reduction in the switch-on time (t_{ON}), at least one further control variable of the constant current source (2) or adjustable DC voltage (V_{Bus}) is changed,
d) wherein the further control variable of the adjustable DC voltage (V_{Bus}) is the presetting of a target value of the adjustable DC output voltage of a circuit block for supplying a DC voltage, and
e) wherein the control unit (3) reduces the switch-on time (t_{ON}) of the switch (S) up to a minimum value (t_{ON_MIN}) to then reduce the supply of power of the constant current source (1) by lowering the DC voltage (V_{Bus}).

11. Method according to claim 10, wherein the switch-on time (t_{ON}) of the switch (S) is reduced, for a reduction in the supply of power, up to a minimal value (t_{ON_MIN}) to then, while maintaining the minimal switch-on time (t_{ON_MIN}) or increasing the switch-on time, reduce the supply of power by changing the further control variable.

12. Method according to one of the claims 10 or 11, wherein the circuit block for supplying a DC voltage is an actively clocked PFC circuit.

13. Method according to claim 12, wherein the supply of power is changed by changing the clocking of a switch of the PFC circuit.

14. Method according to one of the claims 10 to 13, where at least one feedback variable is fed to a control/regulation of the supply of load, such as:
- a dimming signal,
- the current through the at least one LED, and/or
- the voltage across the at least one LED.

15. Method according to one of the claims 10 to 14, where the further control variable of the constant current source (1) or adjustable DC voltage is changed only at a certain load state or operating state.

16. Control unit, in particular integrated circuit, such as ASIC or microcontroller, that is designed to carry out a method according to one of the claims 10 to 15.

## Revendications

1. Circuit de fonctionnement de DEL, comportant :
a) un bloc de circuits (4) destiné à délivrer une tension de courant continu réglable (V_{Bus}), et
b) une source de courant constant cadencée (1), c'est-à-dire un convertisseur cc/cc, alimenté par la tension de courant continu (V_{Bus}), doté d'un commutateur (S) cadencé par une unité de commande (3) de manière à ce que une réduction de la durée de commutation (t_{ON}) du commutateur (S) aboutisse à une réduction de l'alimentation électrique, dans lequel une ou plusieurs DEL (2) peuvent être alimentées à partir de la source de courant constant (1),
c) dans lequel l'unité de commande (3) est conçue, en plus de réduire la durée de commutation (t_{ON}), pour modifier au moins une variable de contrôle supplémentaire de la source de courant constant (1) ou du bloc de circuits (4) pour l'alimentation en courant continu,
d) dans lequel la variable de contrôle supplémentaire du bloc de circuits (4) correspond au préréglage d'une valeur cible de la tension de sortie en courant continu réglable du bloc de circuits (4) pour délivrer une tension en courant continu, et
e) dans lequel l'unité de commande (3) est conçue pour réduire la durée de commutation (t_{ON}) du commutateur (S) jusqu'à une valeur minimum (t_{ON_MIN}) pour ensuite réduire l'alimentation électrique de la source de courant constant (1) en abaissant la tension de courant continu (V_{Bus}).

2. Circuit de fonctionnement de DEL selon la revendication 1, dans lequel l'unité de commande (3) est conçue pour modifier la variable de contrôle supplémentaire de la source de courant constant (1) ou la tension de courant continu réglable (V_{Bus}) uniquement au cours d'états de charge ou d'états fonctionnels particuliers.

3. Circuit de fonctionnement de DEL selon la revendication 1 ou 2, dans lequel l'unité de commande (3) est conçue pour réduire la durée de commutation (t_{ON}) du commutateur (S) pour réduire l'alimentation électrique jusqu'à une valeur minimale (t_{ON_MIN}) pour ensuite, tout en maintenant la durée de commutation minimum (t_{ON_MIN}) ou en augmentant la durée de commutation, réduire l'alimentation électrique en modifiant la variable de contrôle supplémentaire.

4. Circuit de fonctionnement de DEL selon l'une quelconque des revendications précédentes, dans lequel le bloc de circuits (4) destiné à délivrer une tension de courant continu est un circuit de correction du facteur de puissance (PFC) activement cadencé.

5. Circuit de fonctionnement de DEL selon la revendication 4, dans lequel l'alimentation électrique peut être modifiée en modifiant la cadence d'un commutateur du circuit PFC.

6. Circuit de fonctionnement de DEL selon l'une quelconque des revendications précédentes, dans lequel au moins une variable de rétroaction, restituant la charge, est délivrée à l'unité de commande (3), telle que :
- un signal de gradation,
- le courant à travers l'au moins une DEL, et/ou
- la tension à travers l'au moins une DEL.

7. Circuit de fonctionnement de DEL selon l'une quelconque des revendications précédentes, dans lequel l'unité de commande (3) comporte une interface pour délivrer une valeur de gradation.

8. Circuit de fonctionnement de DEL selon l'une quelconque des revendications précédentes, dans lequel la source de courant constant cadencée (1) est sélectionnée à partir d'un :
- convertisseur Buck,
- convertisseur Boost,
- convertisseur Buck-Boost,
- convertisseur SEPIC.

9. Luminaire à DEL, comportant au moins une DEL et un circuit de fonctionnement selon l'une des revendications précédentes.

10. Procédé destiné à faire fonctionner au moins une DEL, doté d'un circuit de fonctionnement de DEL, comportant :
a) la production d'une tension de courant continu réglable (V_{Bus}), et
b) le cadençage d'une source de courant constant (1), c'est-à-dire un convertisseur cc/cc, alimenté par la tension de courant continu, doté d'un commutateur (S), de manière à ce que une réduction de la durée de commutation (t_{ON}) du commutateur (S) aboutisse à une réduction de l'alimentation électrique, dans lequel une ou plusieurs DEL (2) sont alimentées à partir de la source de courant constant (1),
c) dans lequel, en plus de la réduction de la durée de commutation (t_{ON}), au moins une variable de contrôle supplémentaire de la source de courant constant (2) ou de la tension de courant continu réglable (V_{Bus}) est modifiée,
d) dans lequel la variable de contrôle supplémentaire de la tension de courant continu réglable (V_{Bus}) correspond au préréglage d'une valeur cible de la tension de sortie en courant continu réglable d'un bloc de circuits pour délivrer une tension en courant continu, et
e) dans lequel l'unité de commande (3) réduit la durée de commutation (t_{ON}) du commutateur (S) jusqu'à une valeur minimum (t_{ON_MIN}) pour ensuite réduire l'alimentation électrique de la source de courant constant (1) en abaissant la tension de courant continu (V_{Bus}).

11. Procédé selon la revendication 10, dans lequel la durée de commutation (t_{ON}) du commutateur (S) est réduite pour réduire l'alimentation électrique jusqu'à une valeur minimale (t_{ON_MIN}) pour ensuite, tout en maintenant la durée de commutation minimum (t_{ON_MIN}) ou en augmentant la durée de commutation, réduire l'alimentation électrique en modifiant la variable de contrôle supplémentaire.

12. Procédé selon l'une des revendications 10 ou 11, dans lequel le bloc de circuits destiné à délivrer une tension de courant continu est un circuit PFC activement cadencé.

13. Procédé selon la revendication 12, dans lequel l'alimentation électrique est modifiée en modifiant la cadence d'un commutateur du circuit PFC.

14. Procédé selon l'une des revendications 10 à 13, dans lequel une variable de rétroaction est délivrée à un contrôle/réglage de l'alimentation de charge, tel que :
- un signal de gradation,
- le courant à travers l'au moins une DEL, et/ou
- la tension à travers l'au moins une DEL.

15. Procédé selon l'une des revendications 10 à 14, dans lequel la variable de contrôle supplémentaire de la source de courant constant (1) ou de la tension de courant continu réglable est modifiée uniquement au cours d'un état de charge ou d'un état fonctionnel particulier.

16. Unité de commande, en particulier un circuit intégré tel qu'un CIAS ou un microcontrôleur étant conçu pour exécuter un procédé selon l'une des revendications 10 à 15.
